# EUROPEAN PATENT SPECIFICATION

(11) **EP 3 681 731 B1**
(45) Date of publication and mention of the grant of the patent: **09.04.2025**
(21) Application number: 18909100.2
(22) Date of filing: 26.04.2018
(51) Int. Cl.: B60B 3/00, B21K 1/28, B21K 1/32, B60B 3/02

(54) **A DISC WHEEL FOR AGRICULTURAL TRACTOR APPLICATION**
SCHEIBENRAD FÜR ANWENDUNG EINES LANDWIRTSCHAFTLICHEN TRAKTORS
ROUE À DISQUE POUR APPLICATION DE TRACTEUR AGRICOLE

(30) Priority: 07.03.2018 IN 201841008432
(43) Date of publication of application: 22.07.2020
(73) Proprietor: Wheels India Ltd, Chennai, Tamilnadu 600050 (IN)
(72) Inventor: THIYAGARAJAN, Sundararajan, Chennai, Tamil Nadu 600050 (IN); TIRUVENGADAM, Sowrirajan, Chennai, Tamil Nadu 600050 (IN); BALAKRISHNAN, Baskaran, Chennai, Tamil Nadu 600050 (IN); MUNIRATHINAM, Charles, Chennai, Tamil Nadu 600050 (IN); KRISHNAMURTHY, Senthilkumar, Chennai, Tamil Nadu 600050 (IN)
(74) Representative: JD&P Patent Attorneys Joanna Dargiewicz & Partners
(86) International application number: PCT/IB2018/052894
(87) International publication number: WO 2019/171159

(56) References cited:
- EP-A1- 2 676 807
- EP-B1- 2 676 807
- WO-A1-2016/038495
- US-A- 3 262 191
- US-A- 3 391 439
- US-A- 5 219 441
- US-A- 5 577 810
- US-A- 5 577 810

## Description

### FIELD OF INVENTION

The embodiments herein generally relates to agricultural vehicle wheels. Specifically, the embodiments described herein relate to a variable thickness disc wheel for an agricultural tractor application. Particularly, the embodiments described herein relate to a disc wheel with a maximum thickness at a centre and gradually reduced thickness up to connection bracket using flow form process thereby to optimized stress and material required at low stress region.

### BACKGROUND OF THE INVENTION

A tractor is an important agricultural vehicle specifically designed to provide a high tractive effort at slow speeds. A wheel plays a vital role in agricultural vehicles, and helps to carry out various tasks. The wheels in conjunction with axles allow heavy objects to be moved easily facilitating movement or transportation while supporting a load.

The main parts of the wheel are a rim, a disc which are connected by a member lug (Connecting bracket), which is attached to the rim. The rim is an outer edge of a wheel, holding a tire. Disc mates with the hub on the center portion and extended towards rim to meet at lug. A disc is one solid part radiating from the center of a wheel (the hub where the axle connects), connecting the hub with the round traction surface. The term originally referred to portions of a lug which had been split lengthwise into four, six or eight sections. To support the rim structure, a disc can be made by stamping the metal plate.

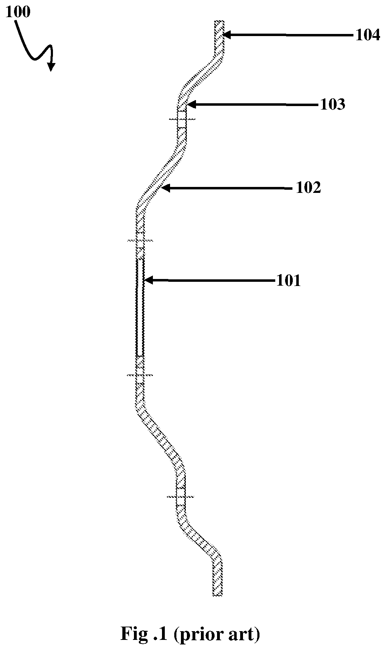

A conventional uniform thickness disc profile is illustrated in Figure 1. The disc profile includes an axle mounting area 101, an axle mounting radius area 102, a wheel weight mounting area 103 and a connection bracket mounting area 104. According to an embodiment, the conventional uniform thickness disc means uniform thickness plate stamped to obtain the profile. The conventional uniform thickness disc profile uses large material input for imparting higher fatigue life. Conventionally, the weight of the wheel is increased to enhance the performance of the wheel. Also, the stress level of the disc under loaded condition is higher at the nave. As a result of high stress at the nave, there is a need for thicker profile on the disc, otherwise it may result in bolt hole failures in uniform thickness wheel profiles. On the other hand the disc radiating above the hub contact region possess less stress concentration, where the uniform thickness adds the weight and does not require an equal thickness of nave. Further, the disc region which connects the lug region through fasteners where the thickness is mandatory for the assembly intact and avoid key hole enlargement.

US5129441A provides a wheel disc and rim to increase the clearance between the wheel and the brake components without increasing the diameter of the wheel. The wheel disc includes a tapered wall thickness of the disc in the intermediate connecting portion. US5129441A is related to the wheel disc that is fixed to the wheel rim through welding or other permanent means.

US5577810 provides a wheel disk having a non-uniform thickness for preventing stress from concentrating at a weld portion between the wheel and the disc. US5577810 is specific to wheel discs that are permanently fixed to the wheel rim through welding.

However, both US5129441A and US5577810 are not related to agricultural wheels wherein the wheel disc is mounted to the wheel rim through fasteners.

Therefore, there is a need for a disc wheel with variable thickness on selected segment for agricultural tractor application to overcome the problem associated with the prior art. Further, there is a need for a disc wheel with variable thickness which uses less material input for imparting high strength. Still, there is a need for a disc wheel with variable thickness to prevent bolt hole failures.

### OBJECTS OF THE INVENTION

Some of the objects of the present disclosure are described herein below:
A main object of the present invention is to provide a disc wheel with variable thickness for agricultural tractor application.

Another object of the present invention is to provide a disc wheel with variable thickness with a maximum thickness at the centre and gradually reduced thickness up to the end of the wheel weight mounting area achieved using flow form process.

Still another object of the present invention is to provide a disc wheel with variable thickness which uses less material input for imparting high strength.

Yet another object of the present invention is to provide a disc wheel with variable thickness to prevent bolt hole failures.

Another object of the present invention is to provide a thickness gradually decreasing from the axle mounting area up to the end of the wheel weight mounting area in a range of (0.4 to 0.5) T.

Another object on the invention is to achieve no spinning on the outer portion of the disc where it connects to lug to avoid keyhole enlargement and avoid stress concentration at the lug weld region.

Another object of the invention is to achieve spinning of square blanks with or without hole and achieving the variable thickness in between the axle mounting area and connection bracket mounting area.

The other objects and advantages of the present invention will be apparent from the following description when read in conjunction with the accompanying drawings which are incorporated for illustration of preferred embodiments of the present invention and are not intended to limit the scope thereof.

### SUMMARY OF THE INVENTION

In view of the foregoing, the invention provides a disc wheel with variable thickness for agricultural tractor application. According to the invention, a disc wheel with variable thickness includes an axle mounting area, an axle mounting radius area, a wheel weight mounting area and a connection bracket mounting area. Thickness of the axle mounting area is T. The axle mounting radius area is connected to the wheel weight mounting area and the thickness of the connection bracket mounting area is same as that of the thickness of the axle mounting area. The thickness of the disc wheel includes a maximum thickness at the axle mounting area and at the connection bracket mounting area; wherein said thickness from the axle mounting area gradually decreases up to the end of the wheel weight mounting area and matches the thickness at the connection bracket mounting area using flow form process; wherein said thickness of the wheel weight mounting area is less than the thickness of the axle mounting radius area and the thickness of the axle mounting radius area is less than the thickness of the connection bracket mounting area; and wherein said disc wheel with variable thickness uses less material input for imparting high strength.

According to an embodiment, the thickness of the axle mounting radius area is 65 % - 90% of the thickness of the axle mounting area. The thickness of the wheel weight mounting area is up to 40% of the thickness of the axle mounting area and the thickness of the connection bracket mounting area is untouched during flow forming process and possesses same thickness as that of the axle mounting area. Therefore, said thickness of the axle mounting radius area is in a range of (0.65 to 0.9) T and thickness of the wheel weight mounting area is in the range of (0.4 to 0.5) T. The disc wheel with variable thickness prevents bolt hole failures by providing higher strength at the axle mounting area.

According to an embodiment, tensile strength of the disc is typically 300 MPa to 800 MPa. The tensile strength of the axle mounting radius area is enhanced by flow forming process based on input material strength and degree of reduction in thickness. The increase in strength would be typically 50 to 400MPa from input material strength.

According to an embodiment, thickness ratio from the axle mounting area to the end of the axle mounting radius area is T to (0.65 to 0.9) T; wherein said thickness ratio from the axle mounting area to the end of the wheel weight mounting area is T to (0.4 to 0.5) T. The disc wheel with variable thickness provides good stress distribution and reduces wheel weight. The disc wheel with variable thickness is formed by flow form process and thereby provides non-uniform thickness across the disc profile.

According to an embodiment, the method for forming a disc wheel using a flow forming process comprising the steps of, spinning a square blank with or without hole in a circular mandrel; forming disc using flow forming process in the square blank ; reducing thickness of the disc gradually from the axle mounting area up to the end of the wheel weight mounting area without affecting thickness of an axle mounting area and a connection bracket mounting area; and piercing and clipping edge of the formed disc.

These and other aspects of the embodiments herein will be better appreciated and understood when considered in conjunction with the following description and the accompanying drawings. It should be understood, however, that the following descriptions, while indicating preferred embodiments and numerous specific details thereof, are given by way of illustration and not of limitation.

### BRIEF DESCRIPTION OF THE DRAWINGS

The detailed description is set forth with reference to the accompanying figures. In the figures the use of the same reference numbers in different figures indicates similar or identical items.
Fig.1 illustrates a conventional uniform thickness disc profile, according to the prior art herein;
Fig.2 illustrates a disc wheel profile for agricultural tractor application, according to an embodiment herein;
Fig.3 illustrates a plan view of a conventional uniform thickness disc profile and a novel disc wheel profile with variable thickness, according to an embodiment herein; and
Fig.4 illustrates a comparison between methods for forming disc wheel using conventional process and flow forming process, according to an embodiment herein.

### DETAILED DESCRIPTION OF THE PREFERRED EMBODIMENTS

The embodiments herein and the various features and advantageous details thereof are explained more fully with reference to the non-limiting embodiments and detailed in the following description. Descriptions of well-known components and processing techniques are omitted so as to not unnecessarily obscure the embodiments herein. The examples used herein are intended merely to facilitate an understanding of ways in which the embodiments herein may be practiced and to further enable those of skill in the art to practice the embodiments herein.

As mentioned above, there is a need for a disc wheel with variable thickness for agricultural tractor application. The embodiments herein achieve this by providing a disc wheel with variable thickness with maximum thickness at a centre and gradually reduced thickness towards up to the mounting bracket area using flow form process. Referring now to drawings, and more particularly to FIGS. 1 through 4, where similar reference characters denote corresponding features consistently throughout the figures, there are shown preferred embodiments.

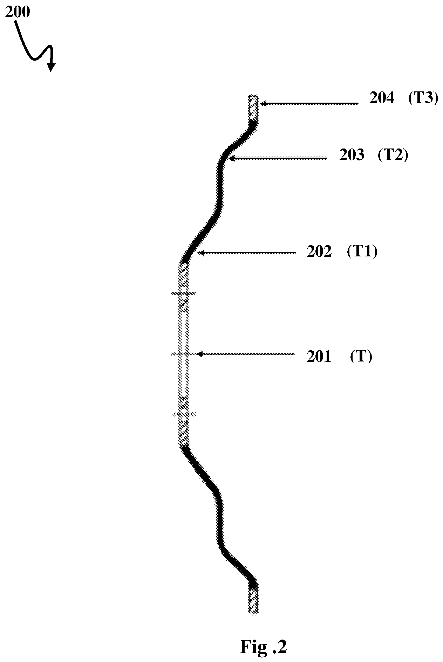

In accordance with the invention, a novel disc wheel profile with variable thickness 200 for agricultural tractor application is illustrated in figure 2. The disc wheel profile with variable thickness includes an axle mounting area 201, an axle mounting radius area 202, a wheel weight mounting area 203 and a connection bracket mounting area 204. The novel disc wheel profile with variable thickness includes a maximum thickness at a centre (hereinafter as axle mounting area 201) and connecting bracket area 204.

According to an embodiment, the axle mounting area 201 extends to the wheel axis. The axle mounting radius area 202 is connected to the wheel weight mounting area 203. Further, the axle mounting radius area 202 has a same thickness as the connection bracket mounting area 204.

According to the invention, the thickness from the axle mounting area 201gradually decreases up to the end of the wheel weight mounting area 203 and matches the thickness at the connection bracket mounting area 204 using flow form process 402. The thickness of the wheel weight mounting area 203 is less than the thickness of the axle mounting radius area 202 and the thickness of the axle mounting radius area 202 is less than the thickness of the connection bracket mounting area 204. The disc wheel 200 with variable thickness uses less material input for imparting high strength. The disc wheel 200 with variable thickness prevents bolt hole failures by providing higher strength at the axle mounting area 201. The disc wheel 200 with variable thickness provides good stress distribution and reduces wheel weight.

According to the invention, the thickness of the disc wheel 200 includes a maximum thickness at the axle mounting area 201 and at the connection bracket mounting area 204. According to an embodiment, the thickness of the axle mounting radius area 202 is in a range of (0.65 to 0.9) T. According to an embodiment, the tensile strength of the axle mounting area 201 is 300Mpa to 800Mpa.

According to an embodiment, the thickness of the wheel weight mounting area 203 is 40% of the thickness of the axle mounting area 201 and the tensile strength may be increased due to flow forming process. Therefore, thickness of the wheel weight mounting area 203 is in a range of (0.4 to 0.5) T.

In an embodiment, the tensile strength of a region between the axle mounting radius area 202 and the wheel weight mounting area 203 can be increased 50MPa to 400MPa from raw materials strength.

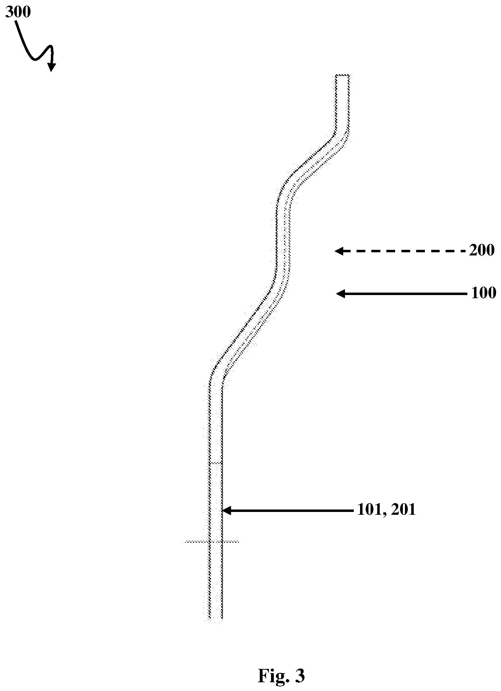

In accordance with an embodiment, figure 3 illustrates a plan view of a conventional uniform thickness disc profile 300 and a novel disc wheel profile with variable thickness. The thickness of the axle mounting area 101 is T. The thickness from the axle mounting area 201gradually decreases up to the end of the wheel weight mounting area 203 and matches the thickness at the connection bracket mounting area 204 using flow form process 402.

According to an embodiment, thickness ratio from the axle mounting area 201 to the axle mounting radius area 202 is T to (0.65 to 0.9) T. The thickness ratio from the axle mounting area 201 to the wheel weight mounting area 203 is T up to ( 0.4 to 0.5) T.

The input material for the spinning operation is in square form with less width than the final component. Spinning process achieves the thickness reduction and as well as increases its width and length to the final dimension.

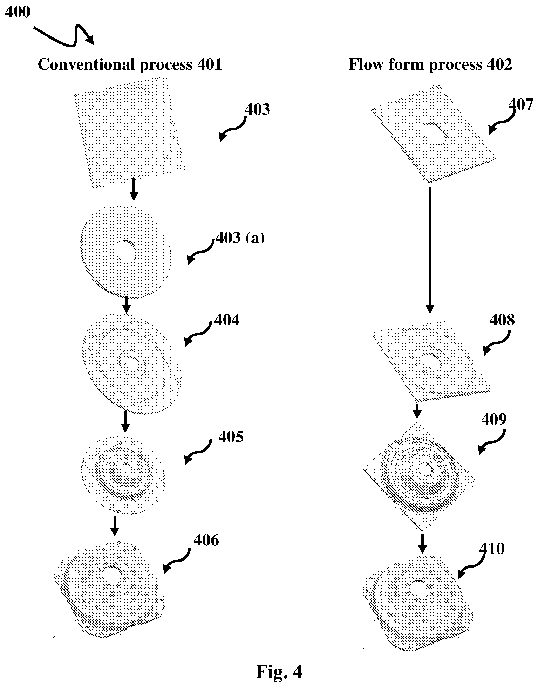

Fig.4 illustrates a comparison 400 between methods for forming disc wheel using conventional process and flow forming process, according to the invention.

The disc wheel 200 with variable thickness is formed by flow form process and thereby provides non-uniform thickness across disc profile. The method for forming a disc wheel in a conventional process 401 comprising the steps of, spinning a round blank 403/a obtained from square blank 403, the circular disc 403/a is spinned to achieve the profile in a circular mandrel 404, forming a shape for the wheel disc using disc forming 405, piercing and clipping edge of the disc formed during disc forming 406. Conventionally for spinning the disc, round shaped blanks are taken to spin the material and extend the diameter in outward direction. The square shaped disc such as agricultural wheel may result in huge material waste in getting the final product by this conventional process. The present invention paves the way for innovative process design to achieve the variable thickness disc by almost negligible material waste.

According to the invention, the method for forming a disc wheel using a flow forming process 402 comprising the steps of, spinning a square blank with or without hole in a circular mandrel 407; forming disc using flow forming process in the square blank 408; reducing thickness of the disc gradually from the axle mounting area 201 up to the end of the wheel weight mounting area 203 without affecting thickness of an axle mounting area and a connection bracket mounting area 409; and piercing and clipping the edge of the formed disc 410.

## Claims

1. A disc wheel (200) with variable thickness for agricultural tractor application comprising:
an axle mounting area (201) having a thickness T;
an axle mounting radius area (202) connecting to a wheel weight mounting area (203);
a connection bracket mounting area (204) having a thickness T3 same as the thickness T of the axle mounting area (201);
**characterized in that**,
said thickness of the disc wheel (200) includes maximum thicknessT at the axle mounting area (201) and at the connection bracket mounting area (204);
wherein said thickness T from the axle mounting area (201) gradually decreases up to the end of the wheel weight mounting area (203) and matches the thickness T3 at the connection bracket mounting area (204);
wherein the thickness T2 of the wheel weight mounting area (203) is less than the thickness T1 of the axle mounting radius area (202) and the thickness T1 of the axle mounting radius area (202) is less than the thickness T of the axle mounting area (201); and
wherein the connection bracket mounting area (204) is parallel to the axle mounting area (201)

2. The disc wheel (200) as claimed in claim 1, wherein said thickness T1 of the axle mounting radius area (202) is in a range of 0.65T - 0.9T.

3. The disc wheel (200) as claimed in claim 1, wherein said thickness T2 of the wheel weight mounting area (203) is in the range of 0.4T - 0.5T.

4. The disc wheel (200) as claimed in claim 1, wherein tensile strength of the axle mounting area (201) is 300 to 800MPa; wherein said tensile strength of a region between the axle mounting radius area (202) and the wheel weight mounting area (203) increase by a value in a range of 50MPa to 400MPa.

5. The disc wheel (200) as claimed in claim 1, wherein said disc wheel is formed by flow form process and thereby provides variable thickness across disc profile without affecting the thickness T of the axle mounting area (201) and the thickness T3 of the connection bracket mounting area (204). .

6. A method for forming the disc wheel (200) as claimed in claim 1, using a flow forming process (402) comprising the steps of:
spinning a square blank with or without hole in a circular mandrel (407);
forming disc using flow forming process in the square blank (408);
reducing thickness of the disc gradually from the axle mounting area (201) up to the end of the wheel weight mounting area (203) without affecting thickness of the axle mounting area (201) and the connection bracket mounting area (409); and
piercing and clipping the edge of the formed disc (410).

## Patentansprüche

1. Ein Scheibenrad (200) mit variabler Dicke zur Verwendung in landwirtschaftlichen Traktoren, umfassend:
einen Achsmontageabschnitt (201) mit einer Dicke T;
einen Achsmontageradiusabschnitt (202), der mit einem Radgewichtsmontageabschnitt (203) verbunden ist;
einen Verbindungshalterungsmontageabschnitt (204) mit einer Dicke T3, die gleich der Dicke T des Achsmontageabschnitts (201) ist;
**dadurch gekennzeichnet, dass**
die Dicke des Scheibenrads (200) eine maximale Dicke an dem Achsmontageabschnitt (201) und dem Verbindungshalterungsmontageabschnitt (204) umfasst;
wobei die Dicke T allmählich von dem Achsmontageabschnitt (201) bis zum Ende des Radgewichtsmontageabschnitts (203) abnimmt und gleich der Dicke T3 an dem Verbindungshalterungsmontageabschnitt (204) ist;
wobei die Dicke T2 des Radgewichtsbefestigungsabschnitts (203) kleiner ist als die Dicke T1 des Achsbefestigungsradiusabschnitts (202) und die Dicke T1 des Achsbefestigungsradiusabschnitts (202) kleiner ist als die Dicke T des Achsbefestigungsabschnitts (201); und
wobei der Befestigungsabschnitt der Verbindungshalterung (204) parallel zum Achsbefestigungsabschnitt (201) ist.

2. Das Scheibenrad (200) gemäß Anspruch 1, wobei die Dicke T1 des Achsbefestigungsradiusabschnitts (202) in einem Bereich von 0,65T - 0,9T liegt.

3. Das Scheibenrad (200) gemäß Anspruch 1, wobei die Dicke T2 des Radgewichtsbefestigungsabschnitts (203) in einem Bereich von 0,4T - 0,5T liegt.

4. Das Scheibenrad (200) gemäß Anspruch 1, wobei die Zugfestigkeit des Achsmontagebereichs (201) 300 bis 800 MPa beträgt; wobei die Zugfestigkeit eines Bereichs zwischen dem Achsmontageradiusbereich (202) und dem Radgewichtmontagebereich (203) um einen Wert in einem Bereich von 50 MPa bis 400 MPa zunimmt.

5. Das Scheibenrad (200) gemäß Anspruch 1, wobei das Scheibenrad durch ein Fließformungsverfahren geformt wird und dadurch eine variable Dicke über das Scheibenprofil aufweist, ohne die Dicke T des Achsmontagebereichs (201) und die Dicke T3 des Verbindungshalterungsmontagebereichs (204) zu beeinflussen.

6. Verfahren zum Formen des Scheibenrads (200) gemäß Anspruch 1 unter Verwendung eines Fließformungsverfahrens (402), umfassend die Schritte:
Drehen eines quadratischen Rohlings mit oder ohne Loch in einem kreisförmigen Dorn (407);
Formen einer Scheibe unter Verwendung eines Fließformungsverfahrens im quadratischen Rohling (408);
allmähliches Reduzieren der Dicke der Scheibe vom Achsmontagebereich (201) bis zum Ende des Radgewichtsmontagebereichs (203), ohne die Dicke des Achsmontagebereichs (201) und des Anschlusshalterungsmontagebereichs (409) zu beeinträchtigen; und
Durchstechen und Abschneiden des Randes der geformten Scheibe (410).

## Revendications

1. Une roue à disque à épaisseur variable (200) destinée à être utilisée dans des tracteurs agricoles, comprenant :
une partie de montage d'essieu (201) ayant une épaisseur T ;
une partie de rayon de montage d'essieu (202) reliée à une partie de montage de masselotte (203) ;
une partie de montage de support de liaison (204) ayant une épaisseur T3 égale à l'épaisseur T de la partie de montage d'essieu (201) ;
**caractérisée en ce que**
l'épaisseur de la roue à disque (200) comprend une épaisseur maximale au niveau de la partie de montage d'essieu (201) et de la partie de montage de support de liaison (204) ;
dans laquelle l'épaisseur T diminue progressivement de la partie de montage d'essieu (201) à l'extrémité de la partie de montage de masselotte (203) et est égale à l'épaisseur T3 au niveau de la partie de montage de support de liaison (204) ;
dans laquelle l'épaisseur T2 de la partie de montage de masselotte (203) est inférieure à l'épaisseur T1 de la partie de rayon de montage d'essieu (202) et l'épaisseur T1 de la partie de rayon de montage d'essieu (202) est inférieure à l'épaisseur T de la partie de montage d'essieu (201) ; et
dans laquelle la partie de montage du support de liaison (204) est parallèle à la partie de montage d'essieu (201).

2. Roue à disque (200) selon la revendication 1, dans laquelle l'épaisseur T1 de la partie de rayon de montage d'essieu (202) est dans une plage de 0,65T - 0,9T.

3. Roue à disque (200) selon la revendication 1, dans laquelle l'épaisseur T2 de la partie de montage de masselotte (203) est dans une plage de 0,4T - 0,5T.

4. Roue à disque (200) selon la revendication 1, dans laquelle la résistance à la traction de la région de montage d'essieu (201) est de 300 à 800 MPa ; dans laquelle la résistance à la traction d'une région entre la région de rayon de montage d'essieu (202) et la région de montage de masselotte (203) augmente d'une valeur dans une plage de 50 MPa à 400 MPa.

5. Roue à disque (200) selon la revendication 1, dans laquelle la roue à disque est formée par un procédé de fluotournage et présente ainsi une épaisseur variable sur le profil du disque sans affecter l'épaisseur T de la région de montage d'essieu (201) et l'épaisseur T3 de la région de montage de support de liaison (204).

6. Procédé de formation de la roue à disque (200) selon la revendication 1 utilisant un procédé de fluotournage (402), comprenant les étapes consistant à :
tourner une ébauche carrée avec ou sans trou dans un mandrin circulaire (407) ;
former un disque en utilisant un procédé de fluotournage dans l'ébauche carrée (408) ;
réduire progressivement l'épaisseur du disque depuis la zone de montage de l'essieu (201) jusqu'à l'extrémité de la zone de montage du poids de roue (203) sans affecter l'épaisseur de la zone de montage de l'essieu (201) et de la zone de montage du support de connexion (409) ; et
percer et couper le bord du disque formé (410).
